Europäisches Patentamt

European Patent Office

Office européen des brevets

(19)

(11) Veröffentlichungsnummer : **0 418 412 B1**

## (12) EUROPÄISCHE PATENTSCHRIFT

(45) Veröffentlichungstag der Patentschrift :
30.11.94 Patentblatt 94/48

(51) Int. Cl.$^5$ : **G06F 7/544**

(21) Anmeldenummer : **89117362.7**

(22) Anmeldetag : **20.09.89**

(54) **Schaltungsanordnung zur Produktsummenberechnung.**

(43) Veröffentlichungstag der Anmeldung :
27.03.91 Patentblatt 91/13

(45) Bekanntmachung des Hinweises auf die
Patenterteilung :
30.11.94 Patentblatt 94/48

(84) Benannte Vertragsstaaten :
**DE FR NL**

(56) Entgegenhaltungen :
**EP-A- 0 260 618**
**FR-A- 2 563 349**

(56) Entgegenhaltungen :
**I.E.E. PROCEEDINGS-G/ELECTRONIC CIR-**
**CUITS & SYSTEMS, Band 134, Nr. 5,Teil G,**
**Oktober 1987, Seiten 216-224, Stevenage,**
**Herts, GB; C.-L. WANG et al.:"Efficient bit-**
**level systolic array for the linear discriminant**
**function classifier"**
**PROCEEDINGS OF THE 7TH SYMPOSIUM ON**
**COMPUTER ARITHMETIC, Urbana, Illinois,**
**4.-6. Juni 1985, Seiten 38-43, IEEE, New York,**
**US; S.P. SMITH et al.: "Design of a fast inner**
**product processor"**
**IEEE TRANS. ON COMPUTERS, Band C-29, Nr.**
**10, Oktober 1980, Seiten 946-950,IEEE, New**
**York, US; E.E. SWARTZLANDER, JR.: "Merged**
**arithmetic"**

(73) Patentinhaber : **Deutsche ITT Industries GmbH**
**Hans-Bunte-Strasse 19**
**D-79108 Freiburg (DE)**

(72) Erfinder : **Ullrich, Manfred Fritz, Dipl.-Ing. (FH)**
**Fischnau 10**
**D-7819 Denzlingen (DE)**

EP 0 418 412 B1

**Beschreibung**

Bei der Verarbeitung von digitalen Signalen, die ursprünglich aus kontinuierlichen Analogsignalen, beispielsweise einem Videosignal, hervorgegangen sind, ist es oftmals erforderlich, aus jeweils zwei mehrstelligen Binärzahlen Produkte zu bilden und diese miteinander zu addieren. Ein Anwendungsfall dieser Produktsummenbildung ist beispielsweise die Realisierung einer digitalen RGB-Matrix in Farbfernsehempfängern mit digitaler Signalverarbeitung. Durch unterschiedliche Wahl der Koeffizienten dieser Matrix kann das Farbverhalten bei der Bildwiedergabe verändert werden, beispielsweise als Funktion der Bildhelligkeit. Bei einer anderen Anwendung werden die Farbeigenschaften der Bildröhre als Matrixkoeffizienten abgespeichert, so daß die Farbansteuerung jeder Bildröhre individuell erfolgen kann. Die erforderlichen Rechenschritte müssen für die Videosignalverarbeitung mit hoher Geschwindigkeit ausgeführt werden. In mathematischer Darstellung ergibt sich dabei beispielsweise folgende Berechnungsaufgabe:

$$\begin{pmatrix} A1 \\ A2 \\ A3 \end{pmatrix} \times \begin{pmatrix} B11 & B12 & B13 \\ B21 & B22 & B23 \\ B31 & B32 & B33 \end{pmatrix} + \begin{pmatrix} D1 \\ D2 \\ D3 \end{pmatrix} = \begin{pmatrix} P1 \\ P2 \\ P3 \end{pmatrix}$$

Die drei Binärzahlen A1, A2, A3 stellen die videofrequenten Y-, I-, Q-Signale dar, die nach der Matrizierung die drei R-, G-, B-Farbsignale bilden, mit denen die Farbkathoden der Bildröhre angesteuert werden.

Die drei Binärzahlen D1, D2, D3 werden als adaptive Werte den drei Farbsignalen noch hinzugefügt. Die eigentliche Farbmatrix wird durch die neun Matrixelemente B11, ..., B33 in der Matrixklammer gebildet. Bei der Videoanwendung sollte der Zahlenbereich zudem auf Werte zwischen +1 und -1 begrenzt werden.

Für Videoanwendungen liegen die einzelnen Binärzahlen in Zweier-Komplementdarstellung vor, wobei beispielsweise die A-Binärzahlen neunstellig, die P-Binärzahlen elfstellig, die B-Binärzahlen der Matrixelemente neunstellig und die D-Binärzahlen elfstellig sind.

Es müssen bei der Matrixberechnung parallel drei Rechnungen ausgeführt werden:

$$A1B11 + A2B12 + A3B13 + D1 = P1$$
$$A1B21 + A2B22 + A3B23 + D2 = P2$$
$$A1B31 + A2B32 + A3B33 + D3 = P3$$

Aus dieser Betrachtung ergibt sich, daß die zugehörige Rechenschaltung aus drei gleichen Recheneinheiten besteht, die jeweils eine der drei Produktsummenberechnungen durchführt. Die übliche Multiplikation von Binärzahlen erfolgt in der Weise, daß jede Stelle der einen Binärzahl mit jeder Stelle der anderen Binärzahl multipliziert wird und die neben- und untereinander stehenden Teilprodukte spaltenweise addiert werden. Ein anfallender Übertrag (= Carry) wird dabei in die nächsthöhere Stelle addiert. Die Teilprodukte reichen dabei von einer niederwertigsten Stelle (= LSB) bis hinauf zu einer höchstwertigen Stelle (= MSB). Jedes Teilprodukt hat den Binärwert "Eins" oder "Null".

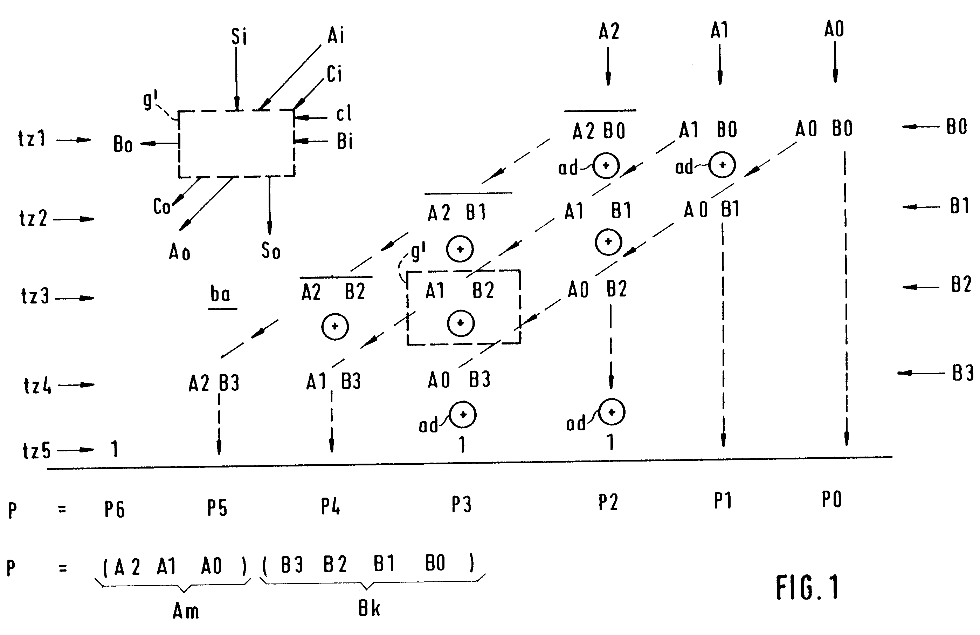

Bei einer Multiplikation von beispielsweise einer dreistelligen Binärzahl Am mit einer vierstelligen Binärzahl Bk, ergibt sich die in Fig.1 dargestellte bekannte Anordnung von Teilprodukten, die spaltenweise zu addieren sind. Ein Querstrich über den Teilprodukten gibt an, daß der Wert des jeweiligen Teilprodukts wegen der Zweier-Komplementdarstellung zu invertieren ist. Das Ergebnis dieser Multiplikation ist die siebenstellige Binärzahl P.

Die Eigentümlichkeit der Zweier-Komplementdarstellung bedingt, daß diejenigen Teilprodukte, an denen genau eine höchstwertige Stelle der A- oder B-Binärzahl beteiligt ist, als invertierte Größen in die Addition eingehen und daß an drei Stellen im Multiplikationsschema je eine "Eins" zu addieren ist - und zwar bei der m-ten, der k-ten sowie bei der (m+k)-ten Stelle. Die (m+k+1 )-te Stelle ist dabei nur für die Überlauferkennung von Bedeutung. Das Teilprodukt in der MSB-Stelle ist nicht invertiert, denn infolge der beiden höchstwertigen Koeffizienten ist es gleichsam zweimal invertiert worden.

Ist m =k, so werden bei der m-ten Wertigkeit zwei Einsen addiert oder bei der (m+1)-ten Wertigkeit eine einzige Eins, was gleichwertig ist.

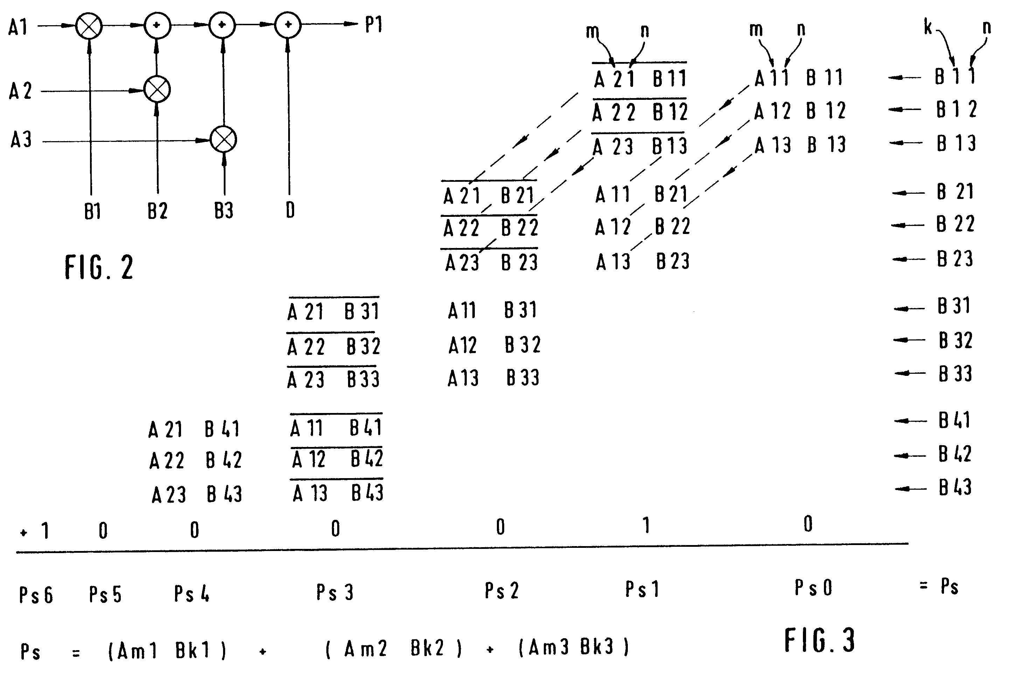

Zur vollständigen Berechnung der oben angegebenen Farbmatrix müssen für eine einzige Matrizenzeile drei derartige Multiplikationen mit unterschiedlichen Binärzahlen ausgeführt werden, deren Ergebnisse danach zu addieren sind, wobei zur Gesamtsumme schließlich noch die D-Binärzahl addiert wird. In Fig.2 ist hierzu als Blockschaltbild eine übliche Rechenschaltung mit Multiplizierern und Addierern dargestellt. Diese Verarbeitungsweise hat indessen für die Produktsummenberechnung einige grundsätzliche Nachteile:

1. Die A3-Binärzahl muß gegen die beiden anderen A-Binärzahlen A1, A2 verzögert werden.

2. Die Verwendung von Parallel-Multiplizieren in Pipeline-Technik macht erforderlich, daß die Signalfront an mehreren Stellen zu begradigen ist.

3. Schließlich ergeben sich Probleme mit der Leitungsführung, weil die Datenleitungen infolge der hohen Stellenzahl sehr breit sind. Auch ergeben sich unterschiedlich große Funktionsblöcke, die schwer aneinander anzupassen sind und so den Flächenbedarf der monolithisch integrierten Schaltung erhöhen.

Es ist daher Aufgabe der in den Ansprüchen gekennzeichneten Erfindung, die Produktsummenberechnung, z.B. einer Matrixzeile, in einem einzigen kompakten Schaltungsblock mit Parallelverarbeitung zu realisieren, wobei die Gesamtdurchlaufzeit möglichst gering ist.

Diese Aufgabe wird erfindungsgemäß durch die Merkmale des Anspruchs 1 gelöst. Vorteilhafte Weiterbildungen ergeben sich aus den abhängigen Ansprüchen 2 bis 6.

Die Erfindung wird nun anhand der Figuren der Zeichnung näher erläutert:

Fig.1 zeigt schematisch das Multiplikationsschema von zwei mehrstelligen Binärzahlen und das sich daraus ergebende Basisarray eines bekannten Parallelmultiplizierers,

Fig.2 zeigt schematisch als Blockschaltbild eine übliche Schaltungsanordnung zur Produktsummenberechnung,

Fig.3 zeigt als Beispiel das erfindungsgemäße Multiplikationsschema zur parallelen Berechnung von drei Produktsummen,

Fig.4 zeigt schematisch als Blockschaltbild eine Grundzelle für ein Gesamtarray nach Fig.5 und

Fig.5 zeigt die schematische Anordnung eines Gesamt-Arrays zur Berechnung einer dreifachen Produktsumme.

Aus dem Multiplikationsschema zweier mehrstelliger Binärzahlen Am, Bk in Fig.1 ist erkennbar, daß in jeder Teilzeile alle Koeffizienten (= Stellen) der A-Binärzahl mit jeweils einem Koeffizient der B-Binärzahl multipliziert werden. In der darauffolgenden Teilzeile sind alle Koeffizienten der A-Binärzahl jeweils um eine Stelle nach links verschoben und jeder A-Koeffizient dieser Teilzeile ist mit dem nächsten B-Koeffizient multipliziert. Diese Linksverschiebung und Multiplikation dauert so lange an, bis der stellenhöchste Koeffizient B3 der B-Binärzahl mit allen Koeffizienten der A-Binärzahl in der letzten Teilzeile multipliziert ist. Wie bereits erwähnt, werden in einer weiteren Teilzeile bei der Zweier-Komplementdarstellung "Einsen" an verschiedenen Stellen addiert. Die Summe aus allen Teilzeilen ergibt als Produkt die mehrstellige P-Binärzahl P.

Aus der Anordnung nach Fig.1 ergibt sich ohne weiteres die Anordnung des Basisarrays ba, das eine Parallelmultiplikation ermöglicht. Dabei schreitet der Rechenvorgang mit jedem Arbeitstakt um eine Teilzeile tz weiter. Das Basisarray ba ist dabei aus Grundzellen g' aufgebaut, die von der oberen Teilzeile mit einem Summensignal Si, einem Carry-Signal Ci und einem Koeffizient Ai der A-Binärzahl gespeist ist. Ferner sind alle Grundzellen g' einer Teilzeile horizontal mit einem Koeffizient Bi der B-Binärzahl gespeist. Innerhalb der Grundzelle befindet sich eine Multipliziereinheit zur Multiplikation der beiden Koeffizienten der A- und B-Binärzahl und eine Addiereinheit, in der das zugeführte Summensignal Si, das Carry-Signal Ci und das intern berechnete Multiplikationsergebnis addiert und um einen Takt verzögert wird. An die unmittelbar darunterliegende Grundzelle wird das neue Summensignal So weitergeleitet und an deren linke Nachbarzelle der ursprüngliche, aber um ein Takt verzögerte A-Koeffizient Ao und das neue Carrysignal Co. Bei der Umsetzung dieser Anordnung nach Fig. 1 in das Schaltungs-Layout wird in der Regel der trapezförmige Schaltungsblock rechteckförmig zusammengeschoben, so daß dann vom räumlichen Standpunkt aus betrachtet nicht mehr die Stellen gleicher Wertigkeit unmittelbar untereinander angeordnet sind.

In Fig.2 ist schematisch dargestellt, wie bei der oben angegebenen Matrix eine Matrixzeile üblicherweise berechnet wird. Mittels dreier Multiplizierer werden zuerst die einzelnen Produkte gebildet, die dann nacheinander über drei Addierer mit jeweils zwei Eingängen addiert werden, einschließlich der D-Binärzahl. Das Ausgangssignal ist die Produktsumme P1.

Der Grundgedanke der Erfindung besteht nun darin, die einzelnen Multiplikationen und Additionen nicht unabhängig voneinander auszuführen, sondern den gesamten Berechnungsvorgang zu verschachteln. Für das Endergebnis ist es nämlich unerheblich, in welcher Reihenfolge die Addition der einzelnen Teilprodukte aller Parallelmultiplizierer geschieht, es müssen nur immer zwei Voraussetzungen erfüllt sein. Erstens dürfen nur Stellen gleicher Wertigkeit - also nur in Spaltenrichtung - aufaddiert werden und zweitens müssen die Summanden vom zeitlich selben Signal stammen.

In Fig.3 ist das Schema dieser Produktsummenbildung anhand des dargestellten Multiplikationsschemas leicht erkennbar. Die Produktsumme Ps ist dabei aus drei Binärzahl-Produkten gebildet, wobei die A-Binärzahlen Am1, Am2, Am3 zweistellig und die B-Binärzahlen Bk1, Bk2, Bk3 vierstellig sind. In der ersten Teilzeile werden alle Koeffizienten der ersten A-Binärzahl Am1 mit dem stellenniedrigsten Koeffizient B11 der ersten B-Binärzahl Bk1 multipliziert. In der nächsten Teilzeile werden alle Koeffizienten der zweiten A-Binärzahl Am2 mit dem stellenniedrigsten Koeffizient B12 der zweiten B-Binärzahl Bk2 multipliziert. Schließlich werden in der dritten Teilzeile die entsprechenden Teilprodukte der dritten A-Binärzahl Am3 mit dem stellenniedrigsten Koeffizient B13 der dritten B-Binärzahl Bk3 gebildet. Dabei stehen jeweils diejenigen drei Teilprodukte genau untereinander, die aus stellengleichen Koeffizienten der A- und B-Binärzahl gebildet sind.

Somit bilden die ersten drei Teilzeilen eine erste Zeilengruppe, deren stellengleichen Teilprodukte unmittelbar untereinanderstehen. Die folgende zweite Zeilengruppe ist um eine Stelle nach links verschoben. Dabei sind die einzelnen Teilprodukte dieser zweiten Zeilengruppe entsprechend ihrem Stellenwert wieder genau untereinander angeordnet. In Fig.3 ist mittels gestrichelter Linien dargestellt, wie die Koeffizienten der drei A-Binärzahlen von Zeilengruppe zu Zeilengruppe nach links unten parallel verschoben werden. Die rechte Spalte gibt die zugehörigen B-Koeffizienten der drei B-Binärzahlen an. In vertikaler Richtung müssen nun lediglich alle Teilprodukte einer Spalte unter Berücksichtigung des Überlaufs addiert werden, um von der gesuchten Produktsumme Ps die Wertigkeiten der einzelnen Stellen, und damit die einzelnen Koeffizienten Ps0 Ps1, ... usw., zu bestimmen. Die Invertierung der einzelnen Teilprodukte und die Addition von einigen "Einsen" in der letzten Teilzeile, ergibt sich nach den angegebenen Regeln der Zweier-Komplementdarstellung.

Aus der schematischen Darstellung von Fig.3 läßt sich ähnlich wie bei der Grundzelle g′ in Fig.1 eine Grundzelle g angeben, mit der ein Gesamtarray ga aufgebaut werden kann, um die Produktsummenbildung nach dem Schema von Fig.3 als Schaltung zu realisieren.

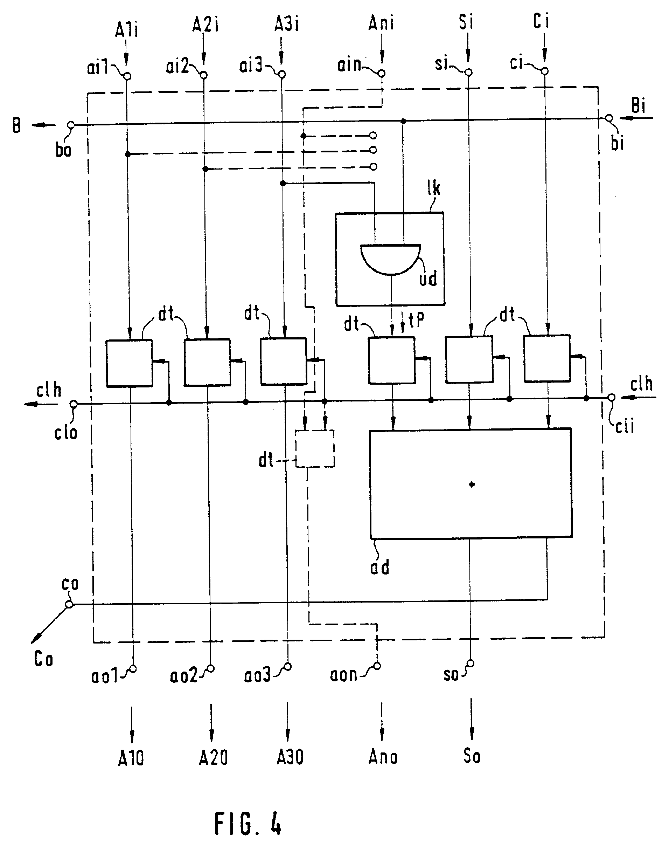

In Fig.4 ist diese Grundzelle g schematisch dargestellt. Aus den benachbarten Grundzellen g der oberen Teilzeile werden der Grundzelle g alle n stellengleiche Koeffizienten der n A-Binärzahlen zugeführt. Im dargestellten Beispiel mit n = 3 (die Produktsumme ist aus drei Produkten zu ermitteln) sind dies die drei Koeffizienten $A1i$, $A2i$, $A3i$. Ferner werden der Grundzelle aus benachbarten Grundzellen in der darüberliegenden Teilzeile ein Summensignal Si über einen Summeneingang si und ein Carry-Signal Ci über einen Carry-Eingang ci zugeführt, wobei das Summensignal Si aus der unmittelbar gegenüberstehenden Grundzelle stammt. Die drei A-Koeffizienten sind der Grundzelle g über drei A-Koeffizienteneingänge ai1, ai2, ai3 zugeführt. Die A-Koeffizienteneingänge der ersten Teilzeile einer Zeilengruppe zg sind aus der rechts oben stehenden Nachbar-Grundzelle gespeist. Die restlichen Teilzeilen dieser Zeilengruppe sind in vertikaler Richtung an die A-Koeffizientenausgänge der Grundzellen in der jeweils vorausgehenden Teilzeile angeschlossen. Alle A-Koeffizienten werden in der Grundzelle jeweils mittels einer Verzögerungsschaltung dt verzögert und einem A-Koeffizientenausgang a01, a02, a03 zugeführt, der die verzögerten A-Koeffizienten A10, A20, A30 an eine benachbarte Grundzelle g der nächsten Teilzeile weitergibt. Die Verzögerungszeit beträgt einen Halbtakt und wird von einem Halbtaktsignal clh gesteuert, mit dem alle Verzögerungsschaltungen dt verbunden sind. Über eine Durchgangsverbindung, die einen Ein- und einen Ausgang cli, clo aufweist, sind alle Grundzellen g einer Teilzeile synchronisiert.

Da alle Grundzellen g einer Teilzeile mit dem selben B-Koeffizient Bi gespeist sind, ist dieser über eine unverzögerte Durchgangsverbindung mit allen Grundzellen dieser Teilzeile verbunden. Die Grundzelle weist somit einen Ein- und Ausgang bi, bo auf. Mit dieser durchgehenden Leitung ist ein Eingang einer logischen Verknüpfungsschaltung lk verbunden, deren anderer Eingang mit einem der n A-Koeffizienten gespeist ist. In Fig.4 ist dies der A-Koeffizient $A3i$ der dritten A-Binärzahl.

In Fig.4 ist gestrichelt eine weitere A-Koeffizienten-Durchgangsverbindung über die A-Koeffizienteneinbzw. - ausgänge ain, aon dargestellt. Dies dient der Verdeutlichung des allgemeineren Falles, daß an der Produktsummenbildung mehr als drei Produkte beteiligt sind. In diesem Fall sind n Produkte aus jeweils zwei mbzw. k-stelligen Binärzahlen Amn, Bkn zu bilden, wobei alle Binärzahlen unterschiedlich sein können. Der Grundzelle g sind somit n A-Koeffizienten $A1i$, $A2i$, ... , Ani zuzuführen. Deren Werte werden unverändert nach einer Halbtaktverzögerung als verzögerte A-Koeffizienten A1o, A2o, ..., Ano an die Grundzelle der nächsten Teilzeile weitergegeben. Die Verknüpfungsschaltung lk ist dabei in jeder Zeile mit einem der A-Koeffizienten $Ai1$, ..., Ani gespeist.

Die Produktbildung erfolgt in der Verknüpfungsschaltung lk mittels eines UND-Gatters ud oder mittels eines NAND-Gatters, wenn daß Teilprodukt tP zu invertieren ist. Dieses Teilprodukt wird über eine vom Halbtaktsignal clh gesteuerte weitere Verzögerungsschaltung dt auf einen Summationseingang eines Volladdierers ad gegeben, dessen beide anderen Summationseingänge jeweils über eine ebenfalls vom Halbtaktsignal clh gesteuerte Verzögerungsschaltung dt mit dem Summensignal Si und dem Carry-Signal Ci aus der vorangehenden Teilzeile gespeist sind. Die Ausgangssignale des Volladdierers ad sind das Summen- und das Carrysignal So, Co, wobei das Summensignal So in der Regel an die unmittelbar darunterliegende Grundzelle und das Carry-Signal Co an die links unten liegende Grundzelle weitergereicht wird.

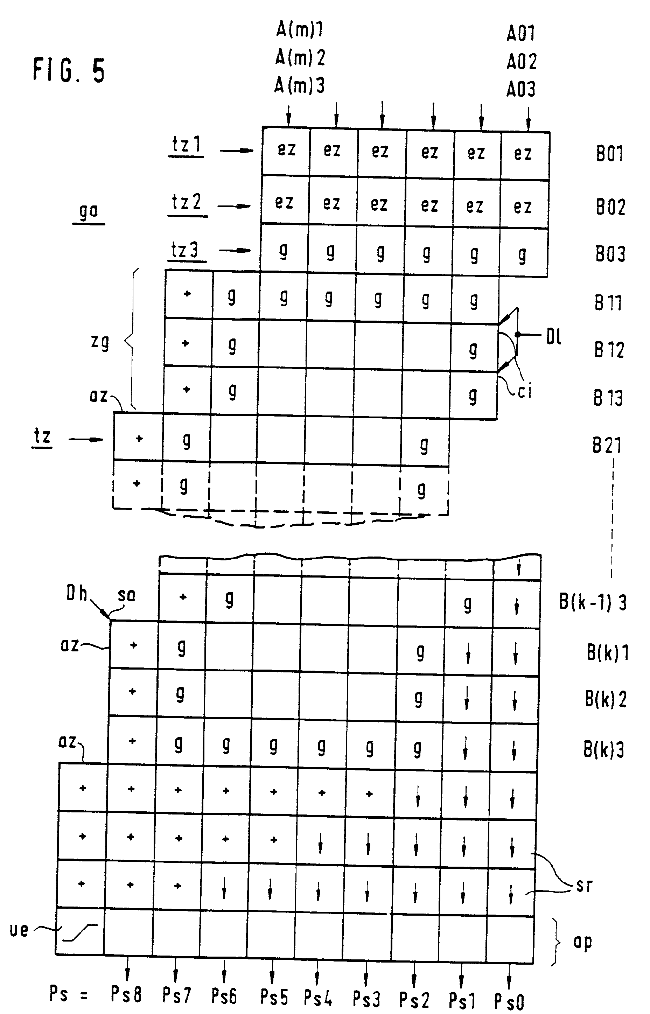

Fig.5 zeigt schließlich schematisch als Blockschaltbild ein Gesamtarray zur Realisierung der Produktsummenbildung, wobei das Gesamtarray ga im wesentlichen aus den in Fig.4 dargestellten Grundzellen g aufgebaut ist. In den Randbereichen weist dieses Gesamtarray ga einige Variationen auf. Nämlich die Eingangzellen ez in den ersten beiden Teilzeilen tz1, tz2, die aus den zugeführten A- und B-Koeffizienten ohne Halbtaktverzögerung jeweils ein Teilprodukt bilden und dieses direkt dem Summen- bzw. Carry-Eingang si, ci der in der gleichen Spalte angeordneten Grundzelle g in der dritten Teilzeile tz3 zuführen.

In der ersten Teilzeile tz1 werden alle Teilprodukte der ersten A-Binärzahl Am1 mit dem LSB-Koeffizient B01 der ersten B-Binärzahl Bk1 gebildet. In der zweiten Teilzeile tz2 werden alle Teilprodukte der zweiten A-Binärzahl Am2 mit dem LSB-Koeffizient B02 der zweiten B-Binärzahl Bk2 gebildet. Die Eingangszellen ez weisen wie die Grundzellen g ebenfalls Durchgangsverbindungen für n A-Koeffizienten A1i, A2i, ..., Ani auf, sie enthalten jedoch keine Verzögerungsschaltungen dt.

Am linken Rand des Gesamtarrays ga befinden sich reine Addierzellen az, weil diese lediglich den Überlauf der vorangehenden Teilzeile zu verarbeiten haben. Ähnlich ist es im unteren Bereich, in dem die Teilproduktbildung abgeschlossen ist, indessen der Überlauf aber noch nach links durchgereicht werden muß.

Die rechte Seite des Gesamtarrays ga schließlich weist vertikale Schieberegisterzellen sr auf, welche im niederwertigen Stellenbereich die bereits festliegenden Koeffizienten PS0, Ps1 , ... der Produktsumme Ps bis zur Ausgangspufferzeile ap weiterreichen. Die höchstwertigen Stellen dieser Zeile dienen der Überlauferkennung ue.

Über freie Carry-Eingänge ci am rechten Rand oder über freie Summandeneingänge sa am linken Rand können die niederwertigen bzw. höherwertigen D-Koeffizienten Dl, Dh der D-Binärzahl als additive Größen zur Produktsummenbildung hinzugefügt werden. Die im Beispiel dargestellte doppelte Zuführung des niederwertigen D-Koeffizienten Dl bewirkt, daß dieser Koeffizient gleichsam in die nächsthöhere Stelle eingegeben wird.

Die Pipeline-Tiefe im angegebenen Beispiel mit drei neunstelligen A- und B-Binärzahlen beträgt siebzehn Volltakte, das heißt, es sind immer siebzehn Teilproduktsätze zeilenweise und zeitgestaffelt unterwegs, wobei von Teilzeile zu Teilzeile die Produktsummenbildung in der Vollständigkeit zunimmt. In der Ausgangspufferzeile ap steht schließlich die komplette Produktsummen- Binärzahl Ps zur Verfügung. In Fig.5 werden nur die neun höchstwertigen Stellen erfaßt, die übrigen niederwertigen Stellen sind unterdrückt. Ein Vorteil der angegebenen Struktur ist, daß die Überlauferkennung und eventuell eine Begrenzung erst ganz am Schluß erfolgt, so daß Zwischensummen ohne weiteres aus dem zulässigen Zahlenbereich herauslaufen dürfen.

Die Anwendung der beschriebenen Schaltungsanordnung zur Produktsummenbildung ist keinesfalls auf die RGB-Matrixberechnung beschränkt, sondern überall dort von Vorteil, wo derartige Produktsummen aus n Einzel-Produkten zu ermitteln sind. Derartige Anwendungsfälle ergeben sich z.B. auch bei der Realisierung von digitalen Filterschaltungen.

**Patentansprüche**

1.  Schaltungsanordnung zur Bildung von n Produkten aus jeweils zwei mehrstelligen Binärzahlen Amn, Bkn und zur Addition dieser n Produkte, wobei die Produktbildung über n Parallelmultiplizierer in Pipelinetechnik erfolgt, die jeweils ein aus Grundzellen, Addierzellen und Schieberegisterzellen bestehendes Basisarray aus untereinander angeordneten Teilzeilen aufweisen,
    gekennzeichnet durch folgende Merkmale:
    - in einem Gesamtarray (ga) sind die einzelnen Teilzeilen (tz) der n Basisarrays (ba) zeilenweise so ineinander geschachtelt, daß jeweils die gleichen Teilzeilen (tz) aller n Basisarrays in einer Zeilengruppe (zg) von n Teilzeilen (tz) untereinander angeordnet sind, wobei die aufeinanderfolgenden Teilzeilen (tz) aller aufeinanderfolgenden Zeilengruppen (zg) in Pipelinetechnik zusammengeschaltet sind,
    - die Grundzelle (g) ist eingangsseitig an benachbarte Grundzellen (g) der darüberliegenden Teilzeile (tz) über einen Summeneingang (si), einen Carryeingang (ci) und n A-Koeffizienteneingänge (ai1,..., ain) und an eine benachbarte Grundzelle (g) derselben Teilzeile über einen B-Koeffizienteneingang (bi) angeschlossen,
    - die Grundzelle (g) ist ausgangsseitig an benachbarte Grundzellen (g) der darunterliegenden Teilzeile (tz) über einen Summenausgang (so), einen Carryausgang (co) und n A-Koeffizientenausgänge (ao1,...,aon) und an die andere benachbarte Grundzelle (g) der selben Teilzeile (tz) über einen B-Koeffizientenausgang (bo) angeschlossen, und
    - die Grundzelle (g) enthält als Teilschaltungen:
        -- eine von einem Halbtaktsignal (clh) gesteuerte Verzögerungseinheit (dt) für n A-Koeffizienten (A1i, A2i, A3i, ..., Ani), die den A-Koeffizienteneingängen (ai1, ai2, ai3, ..., ain) zugeführt sind,
        -- eine unverzögerte Durchgangsverbindung für einen B-Koeffizienten (Bi), der dem B-Koeffizienteneingang (bi) zugeführt ist,
        -- einen Volladdierer (ad), der über jeweils eine Verzögerungseinheit (dt) mit einem dem Summeneingang (si) zugeführten Summensignal (Si), einem dem Carryeingang (ci) zugeführten Carrysignal (C) und einem Teilprodukt (tP) gespeist ist und

-- eine Verknüpfungsschaltung (lk), deren Ausgangssignal das Teilprodukt (tP) ist, wobei die Verknüpfungsschaltung (lk) den B-Koeffizienten (Bi) mit denjenigen unverzögerten A-Koeffizienten (A1i,... ,Ani) verknüpft, deren Teilprodukte in der jeweiligen Teilzeile (tz) zu bilden sind.

2. Schaltungsanordnung nach Anspruch 1 dadurch gekennzeichnet, daß die Verknüpfungsschaltung (lk) aus einem UND-Gatter (ud) besteht.

3. Schaltungsanordnung nach Anspruch 1, dadurch gekennzeichnet, daß die Verknüpfungsschaltung (lk) aus einem NAND-Gatter besteht.

4. Schaltungsanordnung nach Anspruch 1, gekennzeichnet durch folgende Merkmale:
   - die Anzahl n der Produkte ist drei,
   - die Grundzellen (g) der ersten beiden Teilzeilen (tz1, tz2) sind als rein multiplizierende Eingangszellen (ez) ausgebildet,
   - in der ersten Teilzeile (tz1) werden ohne Verzögerung alle Teilprodukte der ersten A-Binärzahl (Am1) mit dem LSB-Koeffizient (B01) der ersten B-Binärzahl (Bk1) gebildet und den Carryeingängen (ci) der Grundzellen (g) in der dritten Teilzeile (tz3) zugeführt,
   - in der zweiten Teilzeile (tz2) werden ohne Verzögerung alle Teilprodukte der zweiten A-Binärzahl (Am2) mit dem LSB-Koeffizient (B02) der zweiten B-Binärzahl (Bk2) gebildet und den Summeneingängen (si) der Grundzellen (g) in der dritten Teilzeile (tz3) zugeführt,
   - die Durchgangsverbindungen für die n A-Koeffizienten (A1i, A2i, ..., Ani) in den Eingangszellen (ez) enthalten keine Verzögerungsschaltungen (dt) und
   - die Produktbildung in der zweiten Teilzeile (tz2) erfolgt zeitgleich zur Produktbildung in der ersten Teilzeile (tz1).

5. Schaltungsanordnung nach Anspruch 1, dadurch gekennzeichnet, daß am rechten Rand des Gesamtarrays (ga) über freie Carry-Eingänge (ci) und am linken Rand über freie Summandeneingänge (sa) D-Koeffizienten (Dl, Dh) stellenrichtig als mehrstellige D-Binärzahl (D) zur Produktsumme hinzugefügt sind.

6. Schaltungsanordnung nach Anspruch 5, dadurch gekennzeichnet, daß die zusätzlichen "Einsen", die infolge der Zweier-Komplementdarstellung der Binärzahlen Amn, Bkn zur Produktsumme zu addieren sind, ebenfalls über freie Summanden- und Carry-Eingänge (sa, ci) des rechten und des linken Randes des Gesamtarrays (ga) stellenrichtig zugeführt sind.

## Claims

1. Circuit arrangement for forming n products from pairs of multidigit binary numbers Amn, Bkn and for adding said n products, the product formation taking place on the pipeline principle via n parallel multipliers each comprising a basic array of partial rows arranged one below the other which consists of basic cells, adding cells, and shift-register cells,
   characterized by the following features:
   - In an overall array (ga), the individual partial rows (tz) of the n basic arrays (ba) are interleaved row by row so that the same partial rows (tz) of all n basic arrays are arranged one below the other in a row group (zg) of n partial rows (tz), with the successive partial rows (tz) of all successive row groups (zg) interconnected on the pipeline principle;
   - the basic cell (g) is connected at the input end to adjacent basic cells (g) of the partial row (tz) located thereabove via an addend input (si), a carry input (ci), and n A-coefficient inputs (ai1, ..., ain), and to an adjacent basic cell (g) of the same partial row via a B-coefficient input (bi);
   - the basic cell (g) is connected at the output end to adjacent basic cells (g) of the partial row (tz) located therebelow via an addend output (so), a carry output (co), and n A-coefficient outputs (ao1, ..., aon), and to the other adjacent basic cell (g) of the same partial row (tz) via a B-coefficient output (bo), and
   - the basic cell (g) contains as subcircuits
     -- a delay unit (dt) for each of n A-coefficients (A1i, A2i, A3i, ..., Ani), which are applied to the A-coefficient inputs (ai1, ai2, ai3, ..., ain), said delay units (dt) being controlled by a half clock signal (clh);
     -- an undelayed through connection for a B-coefficient (Bi), which is applied to the B-coefficient in-

6

put (bi);

-- a full adder (ad) fed via respective delay units (dt) with a sum signal (Si) applied to the sum input (si), with a carry signal (C) applied to the carry input (ci), and with a partial product (tP), and

-- a logic gate (lk) whose output signal is the partial product (tP), said logic gate (lk) combining the B-coefficient (Bi) with those undelayed A-coefficients (A1i, ..., Ani) whose partial products are to be formed in the respective partial row (tz).

2. A circuit arrangement as claimed in claim 1, characterized in that the logic gate (lk) is an AND gate (ud).

3. A circuit arrangement as claimed in claim 1, characterized in that the logic gate (lk) is a NAND gate.

4. A circuit arrangement as claimed in claim 1, characterized by the following features:
   - The number n of products is three;
   - the basic cells (g) of the first two partial rows (tz1, tz2) are implemented as purely multiplying input cells (ez);
   - in the first partial row (tz1), all partial products of the first A-binary number (Am1) and the LSB coefficient (B01) of the first B-binary number (Bk1) are formed without being delayed, and applied to the carry inputs (ci) of the basic cells (g) in the third partial row (tz3);
   - in the second partial row (tz2), all partial products of the second A-binary number (Am2) and the LSB coefficient (B02) of the second B-binary number (Bk2) are formed without being delayed, and applied to the sum inputs (si) of the basic cells (g) in the third partial row (tz3);
   - the through connections for the n A-coefficients (A1i, A2i, ..., Ani) in the input cells (ez) contain no delay units (dt), and
   - the product formation in the second partial row (tz2) takes place simultaneously with the product formation in the first partial row (tz1).

5. A circuit arrangement as claimed in claim 1, characterized in that D-coefficients (Dl, Dh) are added in the correct position as multidigit D-binary numbers (D) to the product sum via free carry inputs (ci) at the right-hand edge of the overall array (ga) and via free addend inputs (sa) at the left-hand edge, respectively.

6. A circuit arrangement as claimed in claim 5, characterized in that the additional "ones" to be added to the product sum because of the two's complement representation of the binary numbers Amn, Bkn are also added in the correct positions via free addend and carry inputs (sa, ci) at the left- and right-hand edges, respectively, of the overall array (ga).

**Revendications**

1. Montage pour la formation de n produits à partir respectivement de deux nombres binaires à plusieurs chiffres (Amn, Bkn) et pour l'addition de ces n produits, la formation des produits s'effectuant selon la technique pipeline par l'intermédiare de n multiplicateurs parallèles, qui possèdent chacun un réseau de base constitué par des cellules de base, des cellules d'addition et des cellules formant registres à décalage et formé de lignes partielles disposées les unes au-dessous des autres, <u>caractérisé par les caractéristiques suivantes :</u>
   - dans un réseau d'ensemble (ga), les différentes lignes partielles (tz) des n réseaux de base (ba) sont imbriquées ligne par ligne entre elles de telle sorte que respectivement les mêmes lignes partielles (tz) de l'ensemble des n réseaux de base sont disposées les unes au-dessous des autres sous la forme d'un groupe (zg) de n lignes partielles (tz), les lignes partielles suivantes (tz) de tous les groupes successifs de lignes (zg) étant interconnectées selon la technique pipeline ;
   - la cellule de base (g) est raccordée, côté entrée, à des cellules de base voisines (g) de la ligne partielle superposée (tz), par l'intermédiaire d'une entrée de somme (si), d'une entrée de report (ci) et de n entrées de coefficients A (ai1, ..., ain) et à une cellule de base voisine (g) de la même ligne partielle, par l'intermédiaire d'une entrée de coefficients B (bi) ;
   - la cellule de base (g) est raccordée, côté sortie, à des cellules de base voisines (g) de la ligne partielle sous-jacente (tz) par l'intermédiaire d'une sortie de somme (so), d'une sortie de report (co) et de n sorties de coefficients A (ao1, ..., aon) et à l'autre cellule de base voisine (g) de la même ligne partielle (tz), par l'intermédiaire d'une sortie de coefficients B (bo), et la cellule de base (g) contient comme circuits partiels :

- une unité de retardement (dt), qui est commandée par un signal de demi-cadence (clh) pour n coefficients A (A1i, A2i, A3i, ..., Ani), qui sont envoyés aux entrées de coefficients A (ai1, ai2, ai3, ..., ain) ;
- une liaison de transfert non retardée pour un coefficient B (bi), qui est envoyé à l'entrée de coefficients B (bi) ;
- un additionneur complet (ad), qui est alimenté, par l'intermédiaire respectivement d'une unité de retardement (dt), par un signal somme (Si) envoyé à l'entrée de somme (si), par un signal de report (C) envoyé à l'entrée de report (ci) et par un produit partiel (tP) ; et
- un circuit combinatoire (lk), dont le signal de sortie est le produit partiel (tP), le circuit combinatoire (lk) combinant les coefficients B (Bi) aux coefficients A non retardés (A1i, ..., Ani), dont les produits partiels doivent être formés dans la ligne partielle respective (tz).

2. Montage suivant la revendication 1, caractérisé en ce que le circuit combinatoire (lk) est constitué par une porte ET (ud).

3. Montage suivant la revendication 1, caractérisé par le fait que le circuit combinatoire (lk) est constitué par une porte NON-ET.

4. Montage suivant la revendication 1, caractérisé par les caractéristiques suivantes :
   - le nombre n des produits est égal à trois ;
   - les cellules de base (g) des deux premières lignes partielles (tz1, tz2) sont réalisées sous la forme de pures cellules multiplicatrices d'entrée (ez) ;
   - dans la première ligne partielle (tz1), tous les produits partiels du premier nombre binaire A (Am1) par le coefficient LSB (BO1) du premier nombre binaire B (BK1) sont sans retard formés et envoyés aux entrées de report (ci) des cellules de base (g) situées dans la troisième ligne partielle (tz3) ;
   - dans la seconde ligne partielle (tz2), tous les produits partiels du second nombre binaire A (Am2) par le coefficient LSB (B02) du second nombre binaire (BK2) sont sans retard formés et envoyés aux entrées de somme (si) des cellules de base (g) de la troisième ligne partielle (tz3) ;
   - les liaisons de passage pour les n coefficients A (A1i, A2i, ..., ani) dans les cellules d'entrée (ez) ne contiennent aucun circuit de retardement (dt) ; et
   - la formation du produit dans la seconde ligne partielle (tz2) s'effectue en même temps que la formation du produit dans la première ligne partielle (tz1).

5. Montage suivant la revendication 1, caractérisé en ce que les coefficients D (Dl, Dh) sont ajoutés sur le bord droit du réseau d'entrée (ga), par l'intermédiaire d'entrées libres de report (ci), et sur le côté gauche par l'intermédiaire d'entrées libres de nombres à additionner (sa), d'une manière correcte du point de vue des chiffres, sous la forme d'un nombre binaire D (D) à plusieurs chiffres pour la somme des produits.

6. Montage suivant la revendication 5, caractérisé en ce que les "uns" supplémentaires, qui doivent être additionnés en raison de la représentation avec complémentation à deux au nombre binaire (Amn, Bkn) pour former la somme des produits, sont également envoyés, par l'intermédiaire d'entrées libres (sa, ci) de nombres à additionner et de report du bord droit et du bord gauche de l'ensemble du réseau (ga), d'une manière correcte du point de vue des chiffres.

FIG.1

FIG. 2

A1

A2

A3

B1   B2   B3   D

P1

---

FIG. 3

k
n

B 11
B 12
B 13

B 21
B 22
B 23

B 31
B 32
B 33

B 41
B 42
B 43

m   n

A 11   B 11
A 12   B 12
A 13   B 13

m   n

A 21   B 11
A 22   B 12
A 23   B 13

A 11   B 21
A 12   B 22
A 13   B 23

A 21   B 21
A 22   B 22
A 23   B 23

A 11   B 31
A 12   B 32
A 13   B 33

A 21   B 31
A 22   B 32
A 23   B 33

A 11   B 41
A 12   B 42
A 13   B 43

A 21   B 41
A 22   B 42
A 23   B 43

| $+1$ | $0$ | $0$ | $0$ | $0$ | $1$ | $0$ |  |
|---|---|---|---|---|---|---|---|
| $Ps6$ | $Ps5$ | $Ps4$ | $Ps3$ | $Ps2$ | $Ps1$ | $Ps0$ | $= Ps$ |

$$Ps = (Am1\ Bk1) + (Am2\ Bk2) + (Am3\ Bk3)$$

10

FIG. 4

FIG. 5